# EUROPEAN PATENT APPLICATION

(11) **EP 3 220 680 A2**
(43) Date of publication of application: **20.09.2017**
(21) Application number: 17161358.1
(22) Date of filing: 16.03.2017
(51) Int. Cl.: H04W 24/10, H04W 16/18, H04B 17/336, H04B 17/345

(54) **SYSTEMS AND METHODS FOR CELLULAR NETWORK ANOMALY DETECTION USING SPATIALLY AGGREGATED DATA**

(30) Priority: 16.03.2016 US 201662309262 P; 15.03.2017 US 201715459695
(71) Applicant: PC-Tel, Inc., Bloomingdale, IL 60108 (US)
(72) Inventor: LU, Wei, Bethesda, MD 20817 (US); SOLTANIAN, Amir, Potomac, MD 20854 (US); ZIK, James, Mount Airy, MD 21771 (US); CHILAMAKURI, Dinesh, Frisco, TX 75035 (US); PAUL, Sumeet, Evanston, IL 60202 (US); FAFADIA, Chintan, Boyds, MD 20841 (US)
(74) Representative: Fenlon, Christine Lesley

(57) **Abstract**

Systems and methods for cellular network anomaly detection using spatially aggregated data are provided. Some methods can include identifying data signals at multiple, non-continuous times from a plurality of geographic regions, identifying a power value for each of the data signals, and when the power value for a first of the data signals corresponding to a first of the plurality of geographic regions is higher than a second value, identifying the first of the plurality of geographic regions as a possible location of external interference in a LTE downlink communication channel, a TD-LTE uplink communication channel, or a FD-LTE uplink communication channel.

## Description

### CROSS-REFERENCE TO RELATED APPLICATIONS

This application claims priority to U.S. Provisional Patent Application No. 62/309,262 filed March 16, 2016 and titled "System and Method for Cellular Network Anomaly Detection Using Spatially Aggregated Data." U.S. Application No. 62/309,262 is hereby incorporated by reference.

### FIELD

The present invention relates generally to cellular networks. More particularly, the present invention relates to a systems and methods for cellular network anomaly detection using spatially aggregated data.

### BACKGROUND

Systems and methods for detecting anomalies on cellular networks ranging from 1G to 5G are known. Indeed, a variety of tools exist in the marketplace, and a variety of known methods for identifying such anomalies are utilized throughout the industry.

However, known systems and methods rely on a linearly collected set of data that reflects a user's forward travel through both space and time. Furthermore, known systems and methods rely on the detection of known and predefined events and criteria that match linearly collected events. Such systems and methods can fail to detect some cellular network anomalies because detection cannot occur until an anomaly event occurs and exceeds a known and predefined threshold. Moreover, such systems and methods heavily rely on being in the right place at the right time to capture the anomaly event.

In view of the above, there is a continuing, ongoing need for improved systems and methods.

### BRIEF DESCRIPTION OF THE DRAWINGS

FIG. 1A and FIG. 1B are flow diagrams of a method for detecting LTE downlink interference in accordance with disclosed embodiments;
FIG. 2 is a flow diagram of a method of analyzing pilot pollution in accordance with disclosed embodiments;
FIG. 3 is a flow diagram of a method of analyzing external interference in accordance with disclosed embodiments; and
FIG. 4 is a flow diagram of a method for detecting TD-LTE uplink interference in accordance with disclosed embodiments.

### DETAILED DESCRIPTION

While this invention is susceptible of an embodiment in many different forms, there are shown in the drawings and will be described herein in detail specific embodiments thereof with the understanding that the present disclosure is to be considered as an exemplification of the principles of the invention. It is not intended to limit the invention to the specific illustrated embodiments.

Embodiments disclosed herein can include systems and methods for cellular network anomaly detection using spatially aggregated data. For example, in some embodiments, data can be captured at multiple times in non-continuous collections, aggregated into data sets, and used to extrapolate anomaly events prior to the event exceeding a predefined threshold. Furthermore, in some embodiments, systems and methods disclosed herein can monitor for and identify changes and fluctuations in overall performance prior to anomaly events degrading to the point of a critical alarm. That is, in some embodiments, burgeoning problem areas can be identified before they fail.

It is to be understood that systems and methods disclosed herein can be implemented with a transceiver device, a memory device, and a user interface device, each of which can be in communication with control circuitry, one or more programmable processors, and executable control software as would be understood by one of ordinary skill in the art. In some embodiments, the transceiver device can communicate with and receive signals from one or more cellular networks at multiple, non-continuous times, and in some embodiments, the memory device can store the signals received by the transceiver device, data related to the signals received by the transceiver device, and a plurality of predefined threshold values. In some embodiments, the executable control software can be stored on a transitory or non-transitory computer readable medium, including, but not limited to, local computer memory, RAM, optical storage media, magnetic storage media, flash memory, and the like, and some or all of the control circuitry, the programmable processors, and the control software can execute and control at least some of the methods described herein.

External interference in LTE communications is a major problem for network operators, and such external interference can be found in either the uplink or the downlink of data signals. However, it is typically very difficult for a network operator to identify a physical location of sources of downlink interference. To solve these and other problems, some embodiments disclosed herein can include systems and methods for detecting LTE downlink external interference, for example, by identifying areas of external interference using the same set of drive test data that is collected in connection with known systems and methods for, for example, benchmarking, optimization, design, and integration.

For example, some systems and methods disclosed herein can use a wide dynamic range of RF scanning data to calculate a wideband interfering signal received power (ISRP), which can be derived as a difference of a measured wideband received signal received power (RSRP) and a measured wideband carrier to interference and noise ratio (CINR) for the LTE downlink of data signals. Then, systems and methods disclosed herein can identify areas that have a high ISRP value as compared to a neighboring area and identify such areas as possible locations of high downlink external interference. In some embodiments, systems and methods disclosed herein can also ensure that areas identified as possible locations of high downlink external interference are not in close proximity to a transmitting cellular tower by identifying or referencing threshold values for the RSRP or actual tower location information, when available.

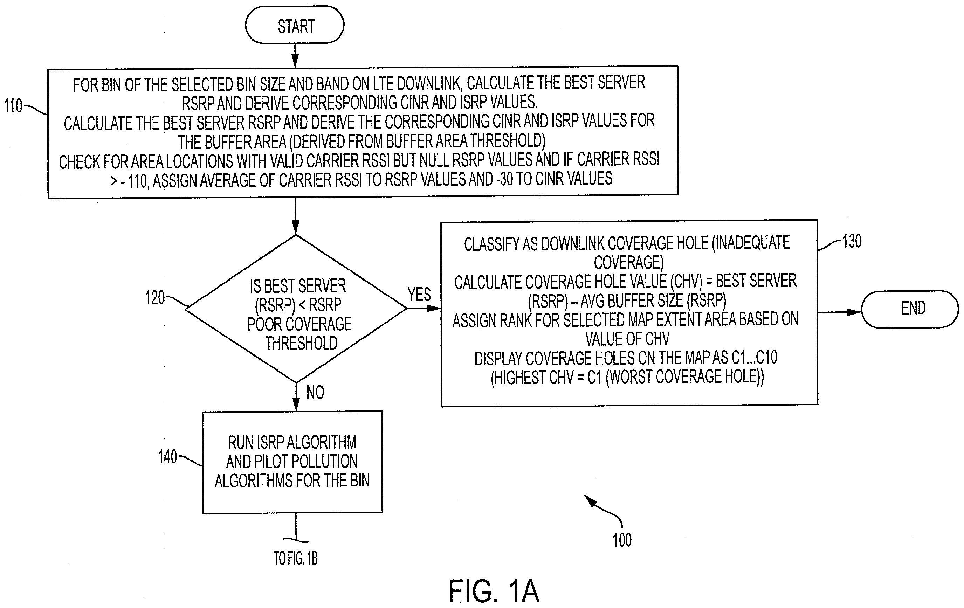

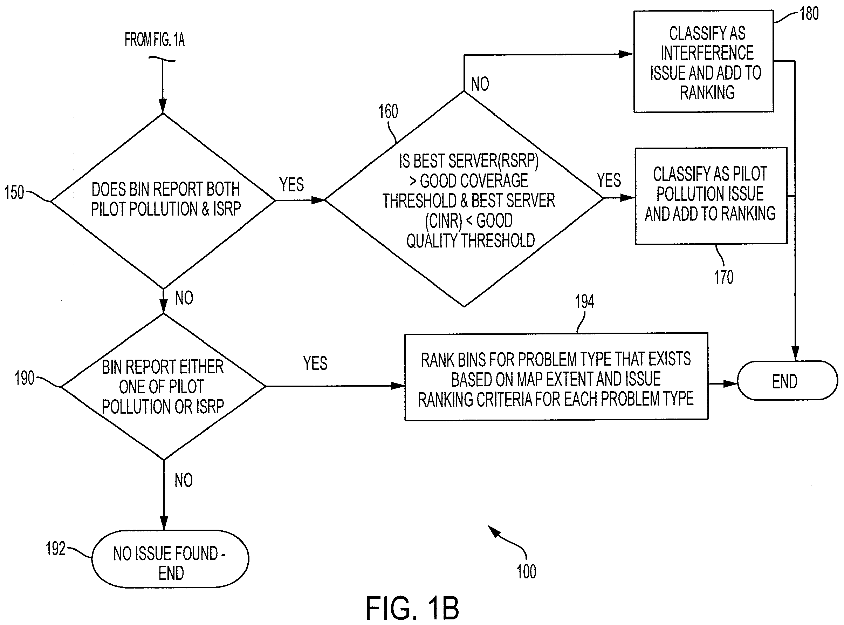

FIG. 1A and FIG. 1B are flow diagrams of a method 100 for detecting LTE downlink interference in accordance with disclosed embodiments. As seen in FIG. 1A, the method 100 can include identifying relevant data as in 110. For example, identifying the relevant data as in 110 can include identifying a plurality of bins, wherein each of the plurality of bins includes signals from a respective one of a plurality of geographic areas of a selected size and, for each of the plurality of bins and for each of a plurality of frequency bands on a LTE downlink channel, calculating a best server RSRP value and deriving a corresponding CINR value and a corresponding ISRP value. Identifying the relevant data as in 110 can also include calculating a best server RSRP value and deriving a corresponding CINR value and a corresponding ISRP value for a buffer area derived from a buffer area threshold value. Identifying the relevant data as in 110 can also include identifying area locations with a valid carrier RSSI value but null RSRP values and, when the valid carrier RSSI value is greater than -110, assigning an average of carrier RSSI values to the null RSRP values and assigning -30 to CINR values.

After the relevant data is identified as in 110, the method 100 can include, for each of the plurality of bins and for each of the plurality of frequency bands on the LTE downlink channel, determining whether a best server RSRP value is less than an RSRP poor coverage threshold value as in 120. If yes, then the method 100 can include classifying a respective one of the plurality of bins as a downlink coverage hole with inadequate coverage, calculating a coverage hole value (CHV) as the best server RSRP value minus an average buffer size RSRP value, assigning a rank for a respective one of a plurality of geographic areas on a map based on the CHV, and displaying coverage holes on the map as C1 ... C10 as in 130, wherein the highest CHV can be assigned C1 to identify the worst coverage hole.

However, if the method 100 determines that the best RSRP value is not less than the RSRP poor coverage threshold value as in 120, then the method can include executing a pilot pollution algorithm and an ISRP algorithm for a respective one of the plurality of bins as in 140. Then, based on the results of executing the algorithms as in 140, the method 100 can include determining whether the respective one of the plurality of bins includes both pilot pollution and interference as in 150.

If the method 100 determines that the respective one of the plurality of bins includes both pilot pollution and ISRP as in 150, then the method 100 can include determining whether the best server RSRP value is greater than a good coverage threshold value and whether the best server CINR value is less than a good quality threshold value as in 160. If yes, then the method 100 can include classifying the respective one of the plurality of bins as having a pilot pollution issue and ranking the respective one of the plurality of bins as in 170. However, if the method 100 determines that the best server RSRP value is not greater than the good coverage threshold value or that the best server CINR value is less than the good quality threshold value as in 160, then the method 100 can include classifying the respective one of the plurality of bins as having an interference issue and ranking the respective one of the plurality of bins as in 180.

If the method 100 determines that the respective one of the plurality of bins does not include both pilot pollution and ISRP as in 150, then the method 100 can include determining whether the respective one of the plurality of bins includes either pilot pollution or ISRP as in 190. If not, then the method 100 can include determining that no issues are found with respect to the respective one of the plurality of bins as in 192. However, if the method 100 determines that the respective one of the plurality of bins includes either pilot pollution or ISRP as in 190, then the method 100 can include ranking each of the plurality of bins for existing problem types based on the plurality of geographic areas on a map and issuing ranking criteria for each of the problem types as in 194.

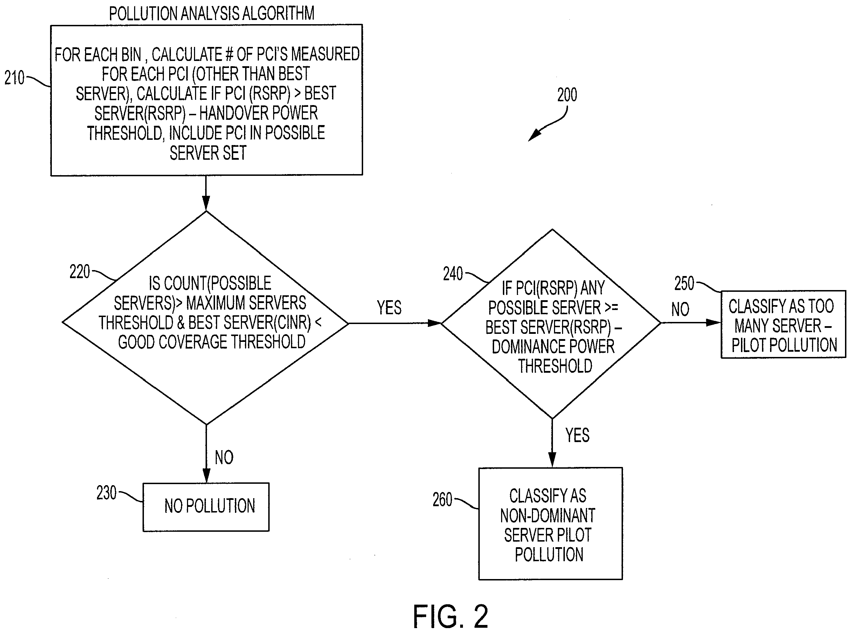

As explained above, the method 100 can include executing a pilot pollution algorithm for a respective one of the plurality of bins as in 140, and FIG. 2 is a flow diagram of a method 200 of analyzing pilot pollution in accordance with disclosed embodiments. As seen in FIG. 2, the method 200 can include, for each of the plurality of bins, calculating a number of measured PCIs and, for each of the measured PCIs other than the best server, calculating whether a PCI RSRP value is greater than the best server RSRP value minus a handover power threshold value and including a respective one of the measured PCIs in a possible server set as in 210. Then, the method 200 can include determining whether the number of measured PCIs in the possible server set is greater than a maximum server threshold value and the best server CINR value is less than a good coverage threshold value as in 220. If not, then the method 200 can include classifying the pilot pollution as no pollution as in 230.

However, if the method 200 determines that the number of measured PCIs in the possible server set is greater than the maximum server threshold value and the best server CINR value is less than the good coverage threshold value as in 220, then the method 200 can include determining whether the PCI RSRP value for any possible server is greater than or equal to the best server RSRP value minus a dominance power threshold value as in 240. If not, then the method 200 can include classifying the pilot pollution as having too many servers as in 250. However, if the method 200 determines that the PCI RSRP value for any possible server is not greater than or equal to the best server RSRP value minus the dominant power threshold value as in 240, then the method 200 can include classifying the pilot pollution as having a non-dominant server as in 260.

In accordance with the method 200, systems and methods disclosed herein can count the number of non-dominant servers and assign a ranking based thereon, wherein a higher ranking can correspond to bigger issues with more servers in the dominant range. Similarly, systems and methods disclosed herein can count the number of bins with too many servers in a bin and assign a ranking based thereon. In some embodiments, bins with a non-dominant server can be assigned a higher ranking then bins with too many servers, and in some embodiments, bins within a predetermined radius of a first bin assigned a ranking, for example, 0.1 miles, can be assigned the same ranking.

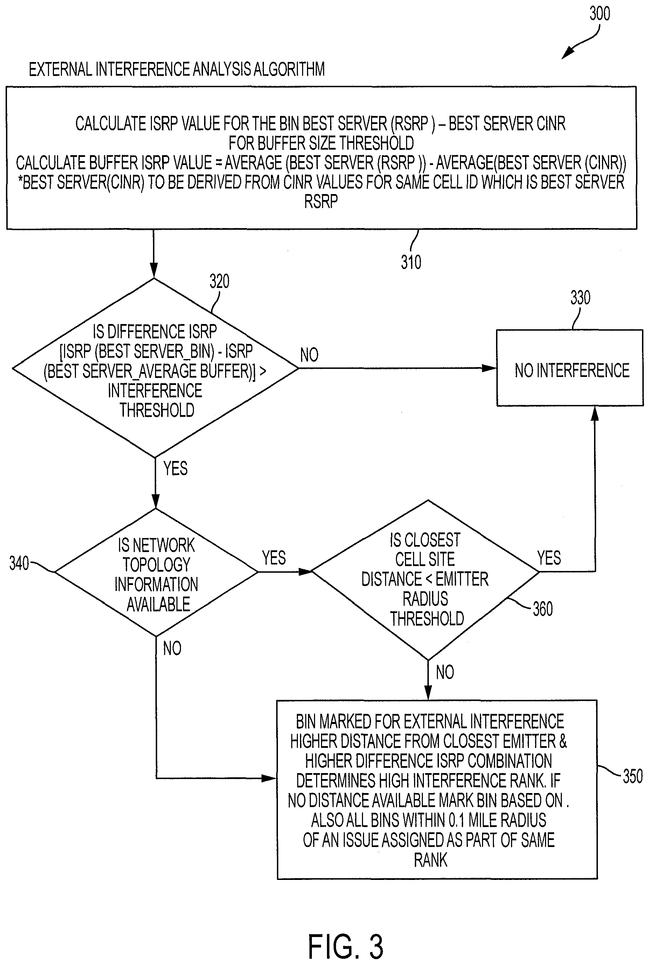

As explained above, the method 100 can include executing an ISRP algorithm for a respective one of the plurality of bins as in 140, and FIG. 3 is a flow diagram of a method 300 of analyzing external interference in accordance with disclosed embodiments. As seen in FIG. 3, the method 300 can include, for each of the plurality of bins, calculating a best server ISRP value for a respective one of the plurality of bins as the best server RSRP value minus the best server CINR value and, for a buffer size threshold value, calculating a buffer ISRP value as an average of best server RSRP values minus an average of best server CINR values as in 310. In some embodiments, the best server CINR value can be derived from CINR values with the same cellular identification as the best server RSRP value.

Then, the method 300 can include determining whether the difference between the best server ISRP value and the buffer ISRP value is greater than an interference threshold value as in 320. If not, then the method 300 can include classifying external interference as no interference as in 330.

However, if the method 300 determines that the difference between the best server ISRP value and the buffer ISRP value is not greater than the interference threshold value as in 320, then the method 300 can include determining whether network topology information is available as in 340. If not, then the method 300 can include classifying external interference for the respective one of the plurality of bins as in 350 in accordance with the following rules. In some embodiments, the respective one of the plurality of bins can be marked as having external interference, and the distance from the closest emitter and the difference between the best server ISRP value and the buffer ISRP value can determine the interference ranking. In some embodiments, if no distance information is available, then the interference ranking can be based on only the difference between the best server ISRP value and the buffer ISRP value, and in some embodiments, bins within a predetermined radius of a first bin assigned a ranking, for example, 0.1 miles, can be assigned the same ranking.

If the method 300 determines that network topology information is available as in 340, then the method 300 can include determining whether the distance to the closest cell site is less than an emitter radius threshold value as in 360. If not, then the method 300 can include classifying external interference for the respective one of the plurality of bins as in 350 and as explained above. However, if the method 300 determines that the distance to the closest cell site is not less than the emitter radius threshold value as in 360, the method 300 can include classifying external interference as no interference as in 330.

As explained above, some embodiments disclosed herein can include systems and methods for detecting LTE downlink external interference. However, uplink interference in LTE communication can also occur and be caused by a number of different sources of interference. It can be difficult to locate such sources, both in terms of frequency and physical location because the sources of interference can be continuous or intermittent and can be wideband or narrow band. Nevertheless, for TD-LTE technology in which both uplink and downlink communications are transmitted in the same frequency range, it is essential that sources of interference on the uplink communication be identified with accuracy. Accordingly, in addition to or as an alternative to detecting downlink external interference, some systems and methods disclosed herein can include detecting TD-LTE uplink external interference, for example, by identifying the frequency and a possible physical location of a source of interference on the uplink channel.

For example, some systems and methods disclosed herein can use LTE power analysis measurements for TD-LTE technology to identify interference in the uplink communications. In some embodiments, systems and methods disclosed herein can analyze uplink transmission time based slots across various transmission techniques and identify as possible sources of interference anomalies in the data transmissions that are higher than an expected power level across the time based slots. In some embodiments, systems and methods can also identify wideband or narrow band sources of interference that are continuous in time or intermittent.

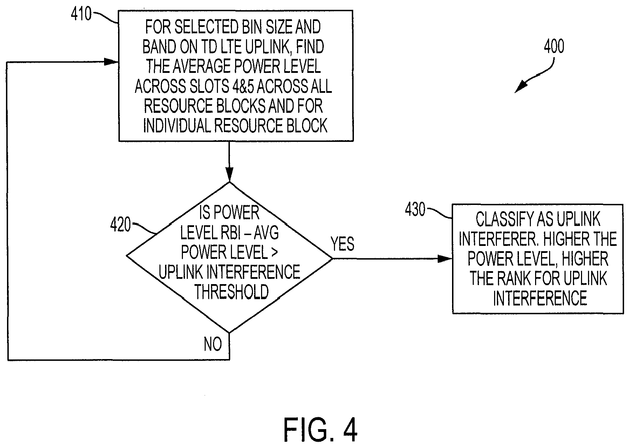

FIG. 4 is a flow diagram of a method 400 for detecting TD-LTE uplink interference in accordance with disclosed embodiments. As seen in FIG. 4, the method 400 can include, for each of a plurality of bins and for each of a plurality of frequency bands on the TD-LTE uplink channel, calculating the average power level across the transmission time based slots for all resource blocks and for an individual resource block as in 410. Then, the method 400 can include determining whether the average power level for an individual resource block minus the average power level for all resource blocks is greater than an uplink interference threshold value as in 420. If not, then the method 400 can continue calculating as in 410. However, if the method 400 determines that the average power level for an individual resource block minus the average power level for all resource blocks is greater than the uplink interference threshold value as in 420, then the method 400 can include classifying an uplink interference source as in 430, wherein higher power levels can be assigned a higher ranking for uplink interference sources.

As explained above, uplink interference in LTE communication can be caused by a number of different sources of interference. However, it can be difficult to locate such sources, both in terms of frequency and physical location because the sources of interference can be continuous or intermittent and can be wideband or narrow band. Nevertheless, for FD-LTE technology in which both uplink and downlink communications are transmitted in the same frequency range, it is also essential that sources of interference on the uplink communication be identified with accuracy. Accordingly, in addition to or as an alternative to detecting TD-LTE uplink external interference, some systems and methods disclosed herein can include detecting FD-LTE uplink external interference, for example, by identifying the frequency and a possible physical location of a source of interference on the uplink channel.

For example, some systems and methods disclosed herein can use a spectrum analysis to detect an average minimum power value for each of a plurality of bins and for each of a plurality of frequency bands on the FD-LTE uplink channel and, based thereon, identify a maximum power value of average minimum power values across the plurality of bins and the plurality of frequency bins and determine whether the identified value is higher than a predefined interference threshold value for expected user device transmissions. When the identified value is higher than the predefined interference threshold value, systems and methods disclosed herein can calculate a coverage area or range for the identified value in terms of bins and frequencies to identify a geographic area affected by a source of interference and a bandwidth of the source of interference. Systems and methods disclosed herein can then repeat the above-identified steps to identify other possible sources of interference. In some embodiments, systems and methods disclosed herein can display on a user interface the top N sources of interference and can receive user input to rank each of the displayed sources or to filter the displayed sources according to a time range to distinguish between the origination and the resolution of sources of interference, when applicable.

In accordance with the above, in some embodiments, power values for each of a plurality of frequencies can be divided into different ones of a plurality of bins based on geography so that values from the same geographic region are grouped in the same bin. Then, a minimum power value of each of the plurality of bins for each of the plurality of frequencies can be identified, and the one of the plurality of bins and the one of the plurality of frequencies with the maximum power value of all of the identified minimum power values can be identified as a possible source of interference. Table 1 illustrates an exemplary matrix in accordance with disclosed embodiments and shows the identified minimum power value of the highest point in the matrix as -95 in Bin 2 and the 709.06 frequency range. Accordingly, the possible source of interference can be located in a geographic region corresponding to Bin 2 and operate in the 709.06 frequency range.

**Table 1**

| | | Frequency Range (RBW=15KHz) | | | | | |
|---|---|---|---|---|---|---|---|
| | | 709.015 | 709.03 | 709.045 | 709.06 | 709.075 | ...n |
| Bins | 1 | -110 | -110 | -110 | -105 | -110 | -110 |
| | 2 | -110.1 | -110.1 | -97 | -95 | -98 | -110.1 |
| | 3 | -98 | -110.3 | -99 | -96 | -99 | -110.3 |
| | 4 | -99 | -110.1 | -110.1 | -103 | -110.1 | -110.1 |
| | ...n | -110.3 | -110.3 | -110.3 | -105 | -110.3 | -110.3 |

In accordance with the above, systems and methods can determine whether the identified value of the highest point in the matrix is higher than a predefined interference threshold, for example, -100. When the identified value is higher than the predefined interference threshold, systems and methods disclosed herein can evaluate the coverage area of the identified possible source of interference in terms of bandwidth and distance to identify points until which the minimum values as identified above for each data point are higher than the predefined interference threshold. For example, as seen in Table 1, the points surrounding the identified minimum power value of the highest point in the matrix that are higher than the predefined interference threshold can be in Bin 2 and the 709.045 frequency range (-97), in Bin 2 and the 709.075 frequency range (-98), in Bin 3 and the 709.045 frequency range (-99), in Bin 3 and the 709.06 frequency range (-96), and in Bin 3 and the 709.075 frequency range (-99). Accordingly, the coverage area of the possible source of interference can include the geographic regions corresponding to Bin 2 and Bin 3 and operate in the 709.045, 709.06, and 709.075 frequency ranges.

The above-identified steps can be repeated until the top N number of possible sources of interference are identified. For example, as seen in Table 1, a second identified minimum power value in the matrix of -98 can be identified in Bin 3 in the 709.015 frequency range, and a point surrounding the second identified minimum power value that is higher than the predefined interference threshold can be in Bin 4 and the 709.015 frequency range (-99). Accordingly, the second possible source of interference can be located in a geographic region corresponding to Bin 3 and operate in the 709.015 frequency range, and the coverage area of the second possible source of interference can cover the geographic area corresponding to Bin 3 and Bin 4 and operate in the 709.015 frequency range. Then, the top N identified possible sources of interference can be ranked according to their identified minimum values, and the ranked minimum values and their corresponding coverage size and bandwidth can be displayed on a user interface. For example, in some embodiments, the bandwidth corresponding to each identified minimum power value can be calculated on either side of a center frequency by counting frequency bins on each side of the center frequency and multiplying by a respective resolution bandwidth value, and the size of the geographic area affected by the possible source of interference can be calculated by summing the identified bins.

Although a few embodiments have been described in detail above, other modifications are possible. For example, the logic flows described above do not require the particular order described or sequential order to achieve desirable results. Other steps may be provided, steps may be eliminated from the described flows, and other components may be added to or removed from the described systems. Other embodiments may be within the scope of the invention.

From the foregoing, it will be observed that numerous variations and modifications may be effected without departing from the spirit and scope of the invention. It is to be understood that no limitation with respect to the specific system or method illustrated is intended or should be inferred. It is, of course, intended to cover by the appended claims all such modifications as fall within the spirit and scope of the claims.

## Claims

1. A method comprising:
identifying data signals on a LTE downlink communication channel captured at multiple, non-continuous times from a plurality of geographic regions;
identifying a wideband interfering signal received power (ISRP) for each of the data signals;
identifying a first of the plurality of geographic regions corresponding to the wideband ISRP for a first of the data signals that is higher than the wideband ISRP for other ones of the data signals corresponding to neighboring ones of the plurality of geographic regions; and
identifying the first of the plurality of geographic regions as a possible location of external interference in the LTE downlink communication channel.

2. The method of claim 1 wherein identifying the wideband ISRP for a respective one of the data signals includes identifying a difference between a measured wideband RSRP for a respective one of the data signals and a measured wideband carrier to interference and noise ratio (CINR) for the respective one of the data signals.

3. The method of claim 1 or 2 wherein identifying the data signals includes identifying the data signals in each of a plurality of frequency bands.

4. The method of claim 1 wherein identifying the wideband ISRP for each of the data signals includes identifying a measured RSRP for a second of the data signals and, when the measured RSRP for the second of the data signals is less than a RSRP poor coverage threshold value, classifying a second of the plurality of geographic regions corresponding to the measured RSRP for the second of the data signals as a downlink coverage hole with inadequate coverage.

5. The method of claim 1 wherein identifying the wideband ISRP for each of the data signals includes identifying a measured RSRP for the first of the data signals and, when the measured RSRP for the first of the data signals is greater than or equal to a RSRP poor coverage threshold value, determining whether the first of the plurality of geographic regions corresponding to the measured RSRP for the first of the data signals includes pilot pollution or is the possible location of the external interference.

6. The method of claim 5 wherein determining whether the first of the plurality of geographic regions corresponding to the measured RSRP for the first of the data signals includes the pilot pollution includes determining whether the first of the plurality of geographic regions includes too many servers or includes a non-dominant server.

7. The method of claim 5 wherein determining whether the first of the plurality of geographic regions corresponding the measured RSRP for the first of the data signals is the possible location of the external interference includes determining that the first of the plurality of geographic regions is not the possible location of the external interference when a distance to a closest cellular site is greater than or equal to an emitter radius threshold value.

8. A method comprising:
identifying data signals on a TD-LTE uplink communication channel captured at multiple, non-continuous times from a plurality of geographic regions;
identifying the data signals corresponding to a first of the plurality of geographic regions with an average power level that is higher than expected; and
identifying the first of the plurality of geographic regions as a possible location of external interference in the TD-LTE uplink communication channel.

9. The method of claim 8 wherein identifying the data signals includes identifying the data signals in each of a plurality of frequency bands.

10. The method of claim 8 or 9 further comprising:
identifying the average power level for the data signals corresponding to each of the plurality of geographic regions;
identifying the average power level for the data signals corresponding to all of the plurality of geographic regions; and
when a difference between the average power level for the data signals corresponding to the first of the plurality of geographic regions and the average power level for the data signals corresponding to all of the plurality of geographic regions is greater than an uplink interference threshold value, identifying the first of the plurality of geographic areas as the possible location of the external interference in the TD-LTE uplink communication channel.

11. A method comprising:
identifying data signals on a FD-LTE uplink communication channel captured at multiple, non-continuous times from a plurality of geographic regions;
identifying a minimum power value for the data signals corresponding to each of the plurality of geographic regions;
identifying a first maximum power value of the minimum power value for the data signals corresponding to each of the plurality of geographic regions; and
when the first maximum power value is higher than a predefined interference threshold value, identifying a first of the plurality of geographic regions corresponding to the first maximum power value as a first possible location of external interference in the FD-LTE uplink communication channel.

12. The method of claim 11 further comprising determining a range of the first possible location of the external interference by identifying adjacent ones of the plurality of geographic regions corresponding to the data signals with the minimum power value higher than the predefined interference threshold.

13. The method of claim 11 or 12 wherein identifying the data signals includes identifying the data signals in each of a plurality of frequency bands.

14. The method of claim 13 further comprising identifying a first of the plurality of frequency bands corresponding to the first maximum power value as carrying the external interference.

15. The method of claim 14 further comprising determining a bandwidth of the external interference by identifying adjacent ones of the plurality of frequency bands corresponding to the data signals with the minimum power value higher than the predefined interference threshold.

16. The method of claim 14 or 15 further comprising:
identifying a second maximum power value of the minimum power value for the data signals corresponding to each of the plurality of geographic regions; and
when the second maximum power value is higher than the predefined interference threshold, identifying a second of the plurality of geographic regions corresponding to the second maximum power value as a second possible location of the external interference in the FD-LTE uplink communication channel.

17. The method of claim 16 further comprising identifying the second maximum power value of the minimum power value for the data signals corresponding to each of the plurality of geographic regions outside of a range of the first possible location of the external interference.

18. The method of claim 16 further comprising identifying the second maximum power value of the minimum power value for the data signals corresponding to each of the plurality of geographic regions outside of a bandwidth of the external interference at the first possible location.

19. An apparatus comprising:
a transceiver device;
a memory device;
a programmable processor; and
executable control software stored on a non-transitory computer readable medium,
wherein the programmable processor and the executable control software identify data signals received by the transceiver device or stored in the memory device,
wherein the data signals are captured at multiple, non-continuous times from a plurality of geographic regions,
wherein the programmable processor and the executable control software identify a power value for each of the data signals, and
wherein, when the power value for a first of the data signals corresponding to a first of the plurality of geographic regions is higher than a second value, the programmable processor and the executable control software identify the first of the plurality of geographic regions as a possible location of external interference in a LTE downlink communication channel, a TD-LTE uplink communication channel, or a FD-LTE uplink communication channel.

20. The apparatus as in claim 19 wherein the programmable processor and the executable control software identify the second value from the power value for each of the data signals.
